(19) Europäisches Patentamt
European Patent Office
Office européen des brevets

(11) EP 1 970 542 B2

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**14.12.2016 Patentblatt 2016/50**

(45) Hinweis auf die Patenterteilung:
**29.05.2013 Patentblatt 2013/22**

(21) Anmeldenummer: **08004099.1**

(22) Anmeldetag: **05.03.2008**

(51) Int Cl.:
***F01D 17/08*** (2006.01) ***F01D 17/16*** (2006.01)
***F04D 27/02*** (2006.01) ***F02C 9/22*** (2006.01)

(54) **Drosselgradabhängige Schaufelverstellung bei Strömungsarbeitsmaschinen**

Throttle-dependent blade adjustment for turbo machines

Décalage d'aube en fonction d'étranglement dans des turbomachines

(84) Benannte Vertragsstaaten:
**DE FR GB**

(30) Priorität: **13.03.2007 DE 102007012119**

(43) Veröffentlichungstag der Anmeldung:
**17.09.2008 Patentblatt 2008/38**

(73) Patentinhaber: **Rolls-Royce Deutschland Ltd & Co KG**
**15827 Blankenfelde-Mahlow (DE)**

(72) Erfinder: **Gümmer, Volker**
**85391 Allershausen (DE)**

(74) Vertreter: **Hoefer & Partner Patentanwälte mbB**
**Pilgersheimer Straße 20**
**81543 München (DE)**

(56) Entgegenhaltungen:

| | |
|---|---|
| **DE-A1- 19 901 509** | **DE-A1- 19 901 509** |
| **DE-A1-102004 013 273** | **DE-A1-102004 025 628** |
| **US-A- 4 028 884** | **US-A- 4 028 884** |
| **US-A1- 2005 147 492** | **US-A1-2005/0 147 492** |

- **H.-J. KIESOW: 'Leitschaufelverstellung bei mehrstufigen Axialverdichtern', 1984 Seiten 24-29 - 62-71 140,141, 154 BIS 159**



Printed by Jouve, 75001 PARIS (FR)

**Beschreibung**

Die vorliegende Erfindung bezieht sich auf Schaufeln von Strömungsarbeitsmaschinen wie Bläser, Verdichter, Pumpen und Ventilatoren axialer, halbaxialer und radialer Bauart mit gasförmigem oder flüssigem Arbeitsmedium. Die Strömungsarbeitsmaschine kann eine oder mehrere Stufen mit jeweils einem Rotor und einem Stator umfassen, in Einzelfällen wird die Stufe lediglich durch einen Rotor gebildet.

Der Rotor besteht aus einer Anzahl von Schaufeln, die mit der rotierenden Welle der Maschine verbunden sind und Energie an das Arbeitsmedium abgeben. Der Rotor kann mit oder ohne Deckband am äußeren Schaufelende ausgeführt sein.

Der Stator besteht aus einer Anzahl feststehender Schaufeln, die nabenseitig wie gehäuseseitig mit festem oder freiem Schaufelende ausgeführt sein können.

Die Rotortrommel und die Beschaufelung sind üblicherweise von einem Gehäuse umgeben, in anderen Fällen, z.B. bei Propellern oder Schiffsschrauben, existiert kein Gehäuse. Die Maschine kann auch einen Stator vor dem ersten Rotor, ein sog. Vorleitrad aufweisen.

Mindestens ein Rotor, Stator oder Vorleitrad kann - abweichend von der unbeweglichen Fixierung - drehbar gelagert sein, um den Anstellwinkel zu verändern. Eine Verstellung erfolgt bei Statoren beispielsweise durch eine von außerhalb des Ringkanals zugängliche Spindel. Alternativ kann die besagte Strömungsarbeitsmaschine bei Mehrstufigkeit zwei gegenläufige Wellen besitzen, so dass die Rotorschaufelreihen von Stufe zu Stufe die Drehrichtung wechseln. Hierbei existieren keine Statoren zwischen aufeinanderfolgenden Rotoren.

Schließlich kann die Strömungsarbeitsmaschine alternativ eine Nebenstromkonfiguration derart aufweisen, dass sich der einstromige Ringkanal hinter einer bestimmten Schaufelreihe in zwei konzentrische Ringkanäle aufteilt, die ihrerseits mindestens jeweils eine weitere Schaufelreihe beherbergen. Fig. 1 zeigt einige mögliche Konfigurationen von Strömungsarbeitsmaschinen (SAM).

Im Einzelnen umfasst die vorliegende Erfindung ein neuartiges Verfahren zur Verstellung von Schaufeln einer Strömungsarbeitsmaschine (SAM).

Strömungsarbeitsmaschinen mit vielen Stufen besitzen üblicherweise eine oder mehrere verstellbare Schaufelreihen. In Sonderfällen findet man aber auch bei einstufigen Konfigurationen eine Schaufelverstellung.

Fig. 1 zeigt einige mögliche Konfigurationen von Strömungsarbeitsmaschinen, die von einer Schaufelverstellung profitieren können.

Üblicherweise betrifft die Verstellbarkeit aus Gründen der einfacheren baulichen Realisierbarkeit das Vorleitrad oder mindestens eine Statorreihe der Strömungsarbeitsmaschine (SAM). Durch die Verdrehung der Verstellschaufeln bei Abweichungen vom Auslegungspunkt verbessert sich das Betriebsverhalten der Strömungsarbeitsmaschine (SAM) dahingehend, dass im Teillastbereich des Kennfeldes eine höhere Abreißgrenze vorliegt und bei einer festgelegten Drehzahl der Massenstrom der Maschine variiert werden kann.

Fig. 2a zeigt das Kennfeld einer Strömungsarbeitsmaschine (SAM) als Auftragung des Gesamtdruckverhältnisses $\pi$ über dem reduzierten Eintrittsmassenstrom $\dot{m}_{1red}$. Die Station 1 bezeichnet den Eintritt, die Station 2 den Austritt der Strömungsarbeitsmaschine (SAM). Das Kennfeld ist durch Linien konstanter aerodynamischer Drehzahl, sogenannte Charakteristiken aufgebaut, die nach oben hin an einer (mit Standard-Verstellmethode erreichten) Abreißgrenze AG-S enden. Weiterhin eingezeichnet sind eine Entwurfsbetriebslinie BL-E sowie ein üblicherweise auf ihr befindlicher Auslegungspunkt AP. Die aerodynamische Drehzahl $N_{red} = N / \sqrt{(T_1)}$ steigt von Charakteristik zu Charakteristik von links nach rechts an. Ein Drosselgrad DG steigt entlang einer Charakteristik von unten nach oben an.

Fig. 2b zeigt auf der linken Seite des Bildes am Beispiel des Vorleitrades einer zweistufigen Strömungsarbeitsmaschine (SAM) ein dem Stand der Technik entsprechendes Verstellgesetz als Auftragung des Schaufelverstelldrehwinkels $\alpha_v$ über der aerodynamischen Drehzahl $N_{red}$. Die Verstellung der Schaufel ändert sich üblicherweise nur in Abhängigkeit der aerodynamischen Drehzahl.

Leitschaufelverstellvorrichtungen gehören zum Stand der Technik, siehe DE 42 16 033 A1, doch eröffnen sich hiermit Möglichkeiten der technischen Nutzung, die derzeit bei weitem nicht ausgeschöpft werden.

Bekannt sind lediglich Verfahren zur Verstellung, die z.B. bei Flugtriebwerken eine Abhängigkeit von der Flughöhe bzw. den Eintrittsbedingungen vorsehen, um mechanisch kritische Betriebspunkte zu umgehen, siehe dazu DE 199 01 509 A1.

Bekannt sind auch Änderungen des Verstellgesetzes zum Zwecke der Stabilisierung eines Gasturbinenverdichters nach einem Pumpstoß (sog. "Surge Recovery"). Alle existierenden Lösungen stellen keine aerodynamisch optimale Ausnutzung der gegebenen Leistungsreserven einer Strömungsarbeitsmaschine (SAM) dar.

Die in Fig. 2b gewählte Darstellung ist der Verständlichkeit wegen beispielhaft für ein Vorleitrad vorgenommen worden, doch kann sowohl eine Maschine nach dem Stand der Technik als auch eine erfindungsgemäß betroffene Maschine selbstverständlich andere oder weitere Verstellschaufelreihen (Rotor wie Stator) aufweisen, von denen jeder eine weitere Verstellkennlinie zugeordnet wäre.

Die linke Seite von Fig. 2b zeigt beispielhaft einen Verstellstator mit Drehachse und Verstelldrehhebel in der Meridianansicht sowie einen Stromlinienprofilschnitt, in dem die Schaufel in Entwurfsstellung und in einer Stellung für den Teillastbetrieb der Maschine gezeigt ist. Wie eingezeichnet, ergibt sich der im Verstellgesetz verwendete Schaufelverstelldrehwinkel $\alpha_v$ als

Differenz aus den Winkeln $\alpha$ und $\alpha_{AP}$.

Der Umstand, dass die Verstellung von Schaufeln nach dem Stand der Technik unabhängig vom aktuellen Betriebspunkt der Maschine oder anderen dafür relevanten Größen allein in Abhängigkeit von der aerodynamischen Drehzahl erfolgt, limitiert die Ausnutzbarkeit vorhandener Leistungsreserven. Die Verstellung nach dem Stand der Technik erlaubt nur eine wirkungsgradbezogene Optimierung für eine einzige Betriebslinie (zumeist die Entwurfsbetriebslinie). Das so gefundene Verstellgesetz ist in Bezug auf die Höhe der Abreißgrenze und in Bezug auf den Wirkungsgrad auf anderen Betriebslinien keinesfalls optimal.

Die DE 10 2004 025 628 A1 betrifft ein Verfahren zum Regeln bzw. Steuern des Verstellwinkels verstellbarer Leitschaufeln eines Leitschaufelgitters eines Verdichters, insbesondere eines Hochdruckverdichters, einer Gasturbine, insbesondere eines Flugtriebwerks, wobei der Verstellwinkel in Abhängigkeit der aerodynamischen Drehzahl des Verdichters nach einem ersten Verstellgesetz bestimmt wird. Erfindungsgemäß wird der Verstellwinkel zusätzlich in Abhängigkeit der mechanischen Drehzahl des Verdichters derart bestimmt, dass dann, wenn die mechanische Drehzahl des Verdichters einen bestimmten Anteil der maximal zulässigen mechanischen Drehzahl erreicht hat, der Verstellwinkel in Abhängigkeit eines zweiten Verstellgesetzes bestimmt wird, wobei das zweite Verstellgesetz einen größeren Öffnungswinkel generiert als das erste Verstellgesetz.

Die US 4 028 884 A beschreibt eine Steuervorrichtung zur Steuerung des Betriebs einer Einlassstatorschaufelanordnung einer Gasturbine eines Kraftwerks. Dabei erfolgt eine Verstellung in Abhängigkeit von der Kompressoreinlasstemperatur.

Aus der US 2005/147492 A1 ist eine Vorrichtung zur elektromechanischen Verstellung von Einlassleitschaufeln vorbekannt.

Der Erfindung liegt die Aufgabe zugrunde, ein Verfahren zur Verstellung mindestens einer Schaufelreihe einer Strömungsarbeitsmaschine zu schaffen, welches die Nachteile des Standes der Technik vermeidet und den Wirkungsgrad erhöht.

Erfindungsgemäß wird die Aufgabe durch die Merkmalskombination des Hauptanspruchs gelöst, die Unteransprüche zeigen weitere vorteilhafte Ausgestaltungen der Erfindung.

Erfindungsgemäss ist ein Verfahren zur Verstellung von Schaufeln geschaffen, das neben der aerodynamischen Drehzahl mindestens eine weitere den Betriebspunkt der Maschine berücksichtigende Grösse zur Regelung verwendet, um auf diese Weise bei stationär oder transient auftretender Abweichung von der Entwurfsbetriebslinie sowohl eine höchstmögliche Abreissgrenze als auch bessere Wirkungsgrade zu erreichen.

Im Folgenden wird die Erfindung anhand von Ausführungsbeispielen in Verbindung mit den Figuren beschrieben. Dabei zeigt:

| | |
|---|---|
| Fig. 1 | mögliche Konfigurationen erfindungsrelevanter Strömungsarbeitsmaschinen |
| Fig. 2a | den Stand der Technik, Kennfeld |
| Fig. 2b | den Stand der Technik, Statorverstellung |
| Fig. 3a | eine erfindungsgemässe Lösung, Kennfeld |
| Fig. 3b | eine erfindungsgemässe Lösung, Schaufelverstellung |
| Fig. 4a | eine weitere erfindungsgemässe Lösung, Kennfeld |
| Fig. 4b | eine weitere erfindungsgemässe Lösung, Schaufelverstellung |
| Fig. 5a | die Anwendung am Beispiel einer Gasturbine, Kennfeld |
| Fig. 5b | die Anwendung am Beispiel einer Gasturbine, Schaufelverstellung |
| Fig. 6a | Möglichkeiten der Definition des Drosselgrades mit Hilfe von Betriebsgrößen der Strömungsarbeitsmaschine (Teil 1) |
| Fig. 6b | Möglichkeiten der Definition des Drosselgrades mit Hilfe von Betriebsgrößen der Strömungsarbeitsmaschine (Teil 2) |
| Fig. 7 | Möglichkeiten der Definition des Drosselgrades mit Hilfe von Betriebsgrößen einer Gasturbine |
| Fig. 8 | Abhängigkeit des zusätzlichen Schaufelverstelldrehwinkels vom Drosselgrad |

Die Fig. 3a zeigt zwei unterschiedliche Kennfelder, die für eine gegebene Strömungsarbeitsmaschine (SAM) mit unterschiedlichen Verstellgesetzen aufgenommen wurden. Dem einen Kennfeld (durchgezogene Linien) liegt ein Verstellgesetz nach konventioneller Art $\alpha_V$ = fkt ($N_{red}$) zugrunde, das auf der Entwurfsbetriebslinie BL-E gute Wirkungsgrade erbringt. Das andere Kennfeld (gestrichelte Linien) wurde mit Hilfe eines anderen Verstellgesetzes, ebenfalls $\alpha_v$ = fkt ($N_{red}$), auf eine maximal hohe Abreißgrenze ausgerichtet. Die Abreißgrenze AG-O und die Entwurfsbetriebslinie BL-E unterscheiden sich im Wesentlichen durch die Stärke der Androsselung bzw. durch den Drosselgrad der Maschine.

Wird, wie erfindungsgemäß vorgesehen, bei fester aerodynamischer Drehzahl die Stellung der Verstellschaufeln kontinuierlich in Abhängigkeit vom Drosselgrad zwischen Entwurfsbetriebslinie und Abreißgrenze geändert, so können beste Wirkungsgrade auf der Entwurfsbetriebslinie und eine maximal hohe Abreißgrenze bzw. Stabilitätsmarge der Strömungsarbeitsmaschine sichergestellt werden. Diese erfindungsgemäße Kombination der Vorteile ergibt die dick und gepunktet eingezeichneten, günstiger verlaufenden Charakteristiken. Zudem können Maschinen, die mit konventionellem Verstellverfahren unzureichende Stabilitätsmarge aufweisen, mit dem erfindungsgemäßen Verfahren einsatzbereit gemacht werden.

Fig. 3b zeigt beispielhaft für ein verstellbares Vorleitrad der Maschine zwei Verläufe des Verstellgesetzes (Drehwinkel $\alpha_V$ in Abhängigkeit von der aerodynamischen Drehzahl $N_{red}$):

a.) für die Entwurfsbetriebslinie und
b.) die maximal erzielbare Abreißgrenze.

Erfindungsgemäß kann die zwischen den zwei Kurven auftretende Differenz $\Delta\alpha_V$ mit der aerodynamischen Drehzahl $N_{red}$ frei variieren. Die Abhängigkeit des Verstelldrehwinkels $\alpha_V$ vom Drosselgrad bei gegebener aerodynamischer Drehzahl kann linear oder auch nichtlinear verlaufen.

Erfindungsgemäß besteht folgende Herangehensweise bei der Realisierung des neuartigen Verstellgesetzes:

Bezug des Drosselgrads auf die Entwurfsbetriebslinie der Strömungsarbeitsmaschine und dabei Schaufelverstellung durch Regelung in inkrementeller Abhängigkeit, derart, dass eine Basis-Schaufelverstellung durch konventionelle Regelung des Verstelldrehwinkels in Abhängigkeit der aerodynamischen Drehzahl vorgenommen wird und zusätzlich bei gegebener aerodynamischer Drehzahl in Abhängigkeit vom Drosselgrad eine Verstellwinkelkorrektur addiert wird:

$$\alpha_V = \alpha_{V,\ BL\text{-}E} + \Delta\alpha_V$$

$$\alpha_{V,\ BL\text{-}E} = fkt\ (N_{red})$$

$$\Delta\alpha_V = fkt\ (N_{red},\ DG)$$

Ähnlich wie Fig. 3a zeigt Fig. 4a zwei unterschiedliche Kennfelder, die für eine gegebene Strömungsarbeitsmaschine mit unterschiedlichen Verstellgesetzen aufgenommen wurden. Dem einen Kennfeld (durchgezogene Linien) liegt ein Verstellgesetz nach konventioneller Art $\alpha_V$ = fkt ($N_{red}$) zugrunde, das auf der Entwurfsbetriebslinie BL-E gute Wirkungsgrade erbringt. Eine ringförmige Wirkungsgradlinie ist zur Verdeutlichung der Lage des Maximums ebenfalls eingezeichnet. Das andere Kennfeld (gestrichelte Linien) wurde mit Hilfe eines anderen Verstellgesetzes, ebenfalls $\alpha_V$ = fkt ($N_{red}$), auf beste Wirkungsgrade auf einer abgesenkten (tiefer liegenden) Betriebslinie BL-A ausgerichtet. Die Entwurfsbetriebslinie BL-E und die abgesenkte Betriebslinie BL-A unterscheiden sich im Wesentlichen durch die Stärke der Androsselung bzw. den Drosselgrad der Maschine.

Wird, wie erfindungsgemäß vorgesehen, bei fester aerodynamischer Drehzahl die Stellung der Verstellschaufeln kontinuierlich in Abhängigkeit vom Drosselgrad zwischen der Entwurfsbetriebslinie und der abgesenkten Betriebslinie geändert, so können in einem weiteren Bereich des Kennfeldes beste Wirkungsgrade erzielt werden. Diese erfindungsgemäße Kombination ergibt die dick und gepunktet eingezeichneten, günstiger verlaufenden Charakteristiken.

Fig. 4b zeigt beispielhaft für ein verstellbares Vorleitrad der Maschine zwei Verläufe des Verstellgesetzes (Drehwinkel $\alpha_V$ in Abhängigkeit von der aerodynamischen Drehzahl $N_{red}$):

a.) für die Entwurfsbetriebslinie, und
b.) für eine abgesenkte Betriebslinie.

Erfindungsgemäß kann die zwischen den zwei Kurven auftretende Differenz $\Delta\alpha_V$ mit der aerodynamischen Drehzahl frei variieren. Die Abhängigkeit des Verstelldrehwinkels $\alpha_V$ vom Drosselgrad bei fester aerodynamischer Drehzahl kann linear oder auch nichtlinear verlaufen.

Erfindungsgemäß bestehen auch hier die zwei im Zusammenhang mit Fig. 3b dargelegten Herangehensweisen bei der Realisierung des neuartigen Verstellgesetzes.

Fig. 5a zeigt das erfindungsgemäße Verfahren zur Verstellung der Statoren am Beispiel des Verdichters einer Gasturbine oder eines Flugtriebwerkes. Die Gasturbine, mindestens bestehend aus den Komponenten Hochdruckverdichter HDV, Brennkammer BK und Hochdruckturbine HDT, ist mit Nummerierung der wichtigen Ein- und Austrittsstationen der Komponenten im oberen Bildteil skizziert. Der Betrieb des Verdichters erfolgt bei stationärem Fahren oder bei sehr langsamen Betriebspunktänderungen auf der eingezeichneten Betriebslinie BL. Wird die Gasturbine oder das Flugtriebwerk beschleunigt, arbeitet der Verdichter für die Zeit des Beschleunigungsmanövers oberhalb der stationären Betriebslinie BL bei normalerweise deutlich reduziertem Abstand zwischen Abreißgrenze und aktueller Betriebslinie, d.h. kleinerer Stabilitätsmarge. Bei Anwendung des erfindungsgemäßen Verfahrens zur Verstellung der Statoren in Abhängigkeit des Drosselgrades kommt es zu einer synchronen Erhöhung der Betriebslinie und der Abreißgrenze. Im Vergleich zum Standard-Verstellverfahren wird erfindungsgemäß die Stabilitätsmarge auch bei transienten Manövern weitgehend erhalten.

Das erfindungsgemäße Verfahren kann selbstverständlich auch bei einem Mitteldruckverdichter zum Einsatz kommen, der bei einem Flugtriebwerk vor dem Hochdruckverdichter angeordnet sein kann und beim Verzögerungsvorgang oberhalb seiner stationären Betriebslinie betrieben werden muss.

Fig. 5b zeigt skizzenhaft, welchem Verlauf der Schaufelverstelldrehwinkel bei Anwendung am Hochdruckverdichter während eines Beschleunigungsmanövers folgt.

Der Begriff des Drosselgrades ist bis jetzt nur in sofern festgelegt worden, als dass er beschreibt, wie weit links (zu kleinen reduzierten Eintrittsmassenströmen $\dot{m}1_{red}$ hin) bzw. wie weit oben (zu großen Druckverhältnissen $\pi$ hin) eine Strömungsarbeitsmaschine auf einer Charakteristik betrieben wird, oder aber mit welchem Abstand zur einer gegebenen Abreißgrenze die Strömungsarbeitsmaschine auf einer Charakteristik betrieben wird. Die exakte Formeldefinition des Drosselgrades kann erfindungsgemäß auf unterschiedliche Weise gegeben sein, da die jeweils sinnvollste Formeldefinition von der konkreten Anwendung der Strömungsarbeitsmaschine und den mess- und regelungstechnisch zur Verfügung stehenden Betriebsgrößen abhängt. Für die im Einzelfall heranzuziehende Definition des Drosselgrades werden einige Definitionen genannt. Sie sind in zwei Kategorien einzuteilen:

Kategorie 1: Definition mit Hilfe von Betriebsgrößen der Strömungsarbeitsmaschine (SAM) selbst, d.h. seinen Ein- und Austrittsgrößen (Druck, Temperatur), Massenstrom und Drehzahl.

Kategorie 2: Definition mit Hilfe von Betriebsgrößen einer Gasturbine (bzw. eines Flugtriebwerks), d.h. den Ein- und Austrittsgrößen, Massenströme, Drehzahlen anderer Komponenten.

In Bezug auf Kategorie 1 sind für die Beschreibung des Drosselgrades (siehe Fig. 6a, links) jene Größen besonders günstig, deren Konturlinien (Isolinien) im Kennfeld der Strömungsarbeitsmaschine (SAM) über möglichst große Abschnitte der Charakteristiken (Linien konstanter aerodynamischer Drehzahl) weitestgehend quer zu den Charakteristiken verlaufen und deren Änderung entlang einer Charakteristik somit vergleichsweise gleichförmig beschaffen ist, siehe Fig. 6a, b. Als günstige Größe ist zunächst der sogenannte β-Wert zu nennen, siehe Fig. 6a, oben, mittig. Linien konstanter β-Werte haben im Kennfeld bei $\pi = 1$ und $\dot{m}_{red} = 0$ gemäß einer willkürlichen Definition ihren Ursprung und decken als ein Fächer von Geraden den gesamten Kennfeldbereich ab. Bei Verfügbarkeit von β-Werten kann der Drosselgrad erfindungsgemäß wie folgt mit Hilfe der jeweils von der aerodynamischen Drehzahl abhängigen Werten auf der Betriebslinie BL und an der Abreißgrenze AG definiert werden:

$$DG = \frac{\beta - \beta_{BL}(N_{red})}{\beta_{AG}(N_{red}) - \beta_{BL}(N_{red})}$$

Eine weitere günstige Größe ist der reduzierte Austrittsmassenstrom $\dot{m}_{2red}$ der Strömungsarbeitsmaschine (SAM), siehe Fig. 6a, oben, rechts. Linien konstanten reduzierten Austrittsmassenstroms verlaufen unter großem Winkel zu den Charakteristiken. Bei Verfügbarkeit von Werten des reduzierten Austrittsmassenstroms kann der Drosselgrad erfindungsgemäß wie folgt definiert werden:

$$DG = \frac{\dot{m}_{2red} - \dot{m}_{2redBL}(N_{red})}{\dot{m}_{2redAG}(N_{red}) - \dot{m}_{2redBL}(N_{red})}$$

Eine weitere verwendbare Größe ist das Gesamtdruckverhältnis π der Strömungsarbeitsmaschine (SAM), siehe Fig. 6b, oben, mittig. Linien konstanten Gesamtdruckverhältnisses verlaufen im Kennfeld waagerecht. Bei sehr flach verlaufenden Charakteristiken kann π daher eine ungünstige Größe zur Drosselgraderfassung sein. Bei Verfügbarkeit von π-Werten kann der Drosselgrad erfindungsgemäß wie folgt definiert werden:

$$DG = \frac{\Pi - \Pi_{BL}(N_{red})}{\Pi_{AG}(N_{red}) - \Pi_{BL}(N_{red})}$$

Eine weitere verwendbare Größe ist das Gesamttemperaturverhältnis τ der Strömungsarbeitsmaschine (SAM), siehe Fig. 6b, oben, rechts. Linien konstanten Gesamttemperaturverhältnisses verlaufen im Kennfeld ebenfalls flach. Bei sehr flach verlaufenden Charakteristiken kann τ daher eine ungünstige Größe zur Drosselgraderfassung sein. Bei Verfügbarkeit von τ-Werten kann der Drosselgrad erfindungsgemäß wie folgt definiert werden:

$$DG = \frac{\tau - \tau_{BL}(N_{red})}{\tau_{AG}(N_{red}) - \tau_{BL}(N_{red})}$$

In Bezug auf Kategorie 2 sind für die Beschreibung des Drosselgrades ebenfalls jene Größen besonders günstig, deren Konturlinien (Isolinien) einerseits unabhängig von den Umgebungsbedingungen der Gasturbine eindeutig im Kennfeld der Strömungsarbeitsmaschinen darstellbar sind und andererseits über möglichst große Abschnitte der Charakteristiken (Linien konstanter aerodynamischer Drehzahl) weitestgehend quer zu den Charakteristiken verlaufen und deren Änderung entlang einer Charakteristik somit vergleichsweise gleichförmig beschaffen ist, siehe Fig. 7. Als günstige Größe ist zunächst die Turbineneintrittstemperatur T3 beziehungsweise der Quotient τ31 aus Turbineneintrittstemperatur und der Eintrittstemperatur T1 der Strömungsarbeitsmaschinen zu nennen, siehe Fig. 7, oben, mittig. Linien konstanter τ31-Werte verlaufen unter großem Winkel zu den Charakteristiken. Bei Verfügbarkeit von τ31-Werten kann der Drosselgrad erfindungsgemäß wie folgt definiert werden:

$$DG = \frac{\tau_{31} - \tau_{31BL}(N_{red})}{\tau_{31AG}(N_{red}) - \tau_{31BL}(N_{red})}$$

Eine weitere verwendbare Größe ist der korrigierte schubspezifische Kraftstoffmassenstrom $b_{F\,korr}$ =

$b_F \sqrt{(T_0)}$, siehe Fig. 7, oben, rechts. $T_0$ ist hierbei die Umgebungstemperatur. Linien konstanter Werte von $b_{F\,korr}$ verlaufen im Kennfeld recht steil und somit möglicherweise unter ungünstiger Neigung zu den unteren Portionen der Charakteristiken. Bei Verfügbarkeit von Werten des korrigierten schubspezifischen Kraftstoffmassenstroms kann der Drosselgrad erfindungsgemäß wie folgt definiert werden:

$$DG = \frac{b_{Fkorr} - b_{FkorrBL}(N_{red})}{b_{FkorrAG}(N_{red}) - b_{FkorrBL}(N_{red})}$$

Schließlich kann es erfindungsgemäß besonders günstig sein, den Drosselgrad über eine frei definierbare Funktion mit Hilfe der zeitlichen Änderungsrate des Kraftstoffmassenstroms DKDT = d ($\dot{m}_{KS}$) / d t oder der zeitlichen Änderungsrate des Wellendrehmoments der betreffenden Komponente DMDT = dM / dt zu definieren:

$$DG = fkt\ (N_{red},\ DKDT)$$

oder

$$DG = fkt\ (N_{red},\ DMDT).$$

Die bislang in Bezug auf Kategorie 1 und Kategorie 2 beschriebenen Definitionen lassen den Drosselgrad zwischen dem Wert 1 an der Abreißgrenze und dem Wert 0 auf der Entwurfsarbeitslinie variieren. Bei Betrieb unterhalb der Entwurfsarbeitslinie ergeben sich Drosselgrade kleiner als 0.

Fig. 8 zeigt beispielhaft eine erfindungsgemäß vorsehbare Abhängigkeit des zusätzlichen Schaufelverstelldrehwinkels $\Delta\alpha_V$ vom Drosselgrad für eine festgelegte aerodynamische Drehzahl $N_{red}$. Der tatsächlich zu realisierende Verlauf ist von der Strömungsarbeitsmaschine (SAM) abhängig und muss experimentell oder auch durch rechnerische Simulation für jede einzelne aerodynamische Drehzahl festgelegt werden.

Ebenfalls erfindungsgemäß, aber wegen der strengen Analogie zum bereits dargelegten nicht weiter beschrieben, ist ein Bezug des Drosselgrades auf jede andere von der Entwurfsbetriebslinie abweichende Linie im Kennfeld der Strömungsarbeitsmaschinen, zum Beispiel eine Linie am unteren Rand bei $\pi$ = 1. Dies bietet sich insbesondere dann an, wenn die Regelung des Schaufelverstelldrehwinkels, wie weiter oben bereits erwähnt, in direkter Weise und nicht inkrementell zu einem Basisverstellgesetz erfolgen soll.

Die vorliegende Erfindung erlaubt einen effizienteren und stabileren Betrieb einer Strömungsarbeitsmaschine. Bei Einsatz des Konzeptes im Hochdruckverdichter eines Flugtriebwerkes mit rund 25000 Pfund Schub ergibt sich eine Reduzierung des spezifischen Kraftstoffverbrauches von bis zu 0,5%.

## Patentansprüche

1. Verfahren zur Verstellung mindestens einer Schaufelreihe einer Strömungsarbeitsmaschine, das in Abhängigkeit vom aktuellen Betriebspunkt neben der aerodynamischen Drehzahl mindestens eine weitere, die Lage des Betriebspunkts im Kennfeld der Strömungsarbeitsmaschine berücksichtigende Größe zur Regelung heranzieht, **dadurch gekennzeichnet, dass** die Betriebspunktabhängigkeit der Schaufelverstellung bei gegebener aerodynamischer Drehzahl mit Hilfe eines Drosselgrades erfasst wird und dass der Drosselgrad sich auf die Entwurfsbetriebslinie der Strömungsarbeitsmaschine bezieht und dabei die Schaufelverstellung durch Regelung in inkrementeller Abhängigkeit gemäß $\alpha_V = \alpha_{VBL\text{-}E} + \Delta\alpha_V$ erfolgt, derart, dass eine Basis-Schaufelverstellung durch konventionelle Regelung des Verstelldrehwinkels in Abhängigkeit der aerodynamischen Drehzahl in der Form $\alpha_{VBL\text{-}E}$ = fkt ($N_{red}$) vorgenommen wird und zusätzlich bei gegebener aerodynamischer Drehzahl in Abhängigkeit vom Drosselgrad eine Verstellwinkelkorrektur in der Form $\Delta\alpha_V$ = fkt ($N_{red}$, DG) addiert wird.

2. Verfahren nach Anspruch 1, **dadurch gekennzeichnet, dass** der Drosselgrad mit Hilfe von β-Werten der Strömungsarbeitsmaschinen gemäß

$$DG = \frac{\beta - \beta_{BL}\ (N_{red})}{\beta_{AG}\ (N_{red}) - \beta_{BL}\ (N_{red})}$$

definiert ist.

3. Verfahren nach Anspruch 1, **dadurch gekennzeichnet, dass** der Drosselgrad mit Hilfe von Werten des reduzierten Austrittsmassenstroms der Strömungsarbeitsmaschinen gemäß

$$DG = \frac{\dot{m}_{2red} - \dot{m}_{2redBL}(N_{red})}{\dot{m}_{2redAG}(N_{red}) - \dot{m}_{2redBL}(N_{red})}$$

definiert ist.

4. Verfahren nach Anspruch 1, **dadurch gekennzeichnet, dass** der Drosselgrad mit Hilfe von Werten des Gesamtdruckverhältnisses der Strömungsarbeitsmaschinen gemäß

$$DG = \frac{\Pi - \Pi_{BL}(N_{red})}{\Pi_{AG}(N_{red}) - \Pi_{BL}(N_{red})}$$

definiert ist.

**5.** Verfahren nach Anspruch 1, **dadurch gekennzeichnet, dass** der Drosselgrad mit Hilfe von Werten des Gesamttemperaturverhältnisses der Strömungsarbeitsmaschinen gemäß

$$DG = \frac{\tau - \tau_{BL}(N_{red})}{\tau_{AG}(N_{red}) - \tau_{BL}(N_{red})}$$

definiert ist.

**6.** Verfahren nach Anspruch 1, **dadurch gekennzeichnet, dass** der Drosselgrad mit Hilfe von Werten des Gesamttemperaturverhältnisses einer Gasturbine gemäß

$$DG = \frac{\tau_{31} - \tau_{31BL}(N_{red})}{\tau_{31AG}(N_{red}) - \tau_{31BL}(N_{red})}$$

definiert ist.

**7.** Verfahren nach Anspruch 1, **dadurch gekennzeichnet, dass** der Drosselgrad mit Hilfe von Werten des korrigierten schubspezifischen Kraftstoffmassenstroms einer Gasturbine gemäß

$$DG = \frac{b_{Fkorr} - b_{FkorrBL}(N_{red})}{b_{FkorrAG}(N_{red}) - b_{FkorrBL}(N_{red})}$$

definiert ist.

**8.** Verfahren nach Anspruch 1, **dadurch gekennzeichnet, dass** der Drosselgrad als Funktion der zeitlichen Änderungsrate des Kraftstoffmassenstroms DKDT = d ($\dot{m}_{KS}$) / d t einer Gasturbine gemäß DG = fkt ($N_{red}$, DKDT) definiert ist.

**9.** Verfahren nach Anspruch 1, **dadurch gekennzeichnet, dass** der Drosselgrad als Funktion der zeitlichen Änderungsrate des Wellendrehmoments DMDT = dM / dt der betreffenden Komponente gemäß DG = fkt ($N_{red}$, DMDT)definiert ist.

**10.** Verfahren nach Anspruch 1, **dadurch gekennzeichnet, dass** das Verfahren der Verstellung mindestens einer Vorleitrad- oder Statorreihe einer Strömungsarbeitsmaschine dient.

**11.** Verfahren nach Anspruch 1 oder 10, **dadurch gekennzeichnet, dass** das Verfahren bei einem stationären Betrieb der Strömungsarbeitsmaschine eingesetzt wird.

**12.** Verfahren nach Anspruch 1 oder 10, **dadurch gekennzeichnet, dass** das Verfahren bei einem transienten (instationären) Betrieb der Strömungsarbeitsmaschine eingesetzt wird.

**13.** Verfahren nach einem der Ansprüche 1 oder 10 - 12, **dadurch gekennzeichnet, dass** das Verfahren zur Erreichung einer erhöhten Abreißgrenze im Kennfeld (Darstellung von Gesamtdruckverhältnis $\pi$ über dem reduzierten Eintrittsmassenstrom $\dot{m}_{1red}$) der Strömungsarbeitsmaschine ausgebildet ist.

**14.** Verfahren nach einem der Ansprüche 1 oder 10 - 13, **dadurch gekennzeichnet, dass** das Verfahren zur Erreichung erhöhter Wirkungsgrade im Kennfeld (Darstellung von Gesamtdruckverhältnis $\pi$ über dem reduzierten Eintrittsmassenstrom $\dot{m}_{1red}$) der Strömungsarbeitsmaschine an Orten abseits einer gegebenen Entwurfsbetriebslinie ausgebildet ist.

## Claims

**1.** Method for the variation of at least one blade row of a fluid-flow machine, in which, in dependence of the actual operating point, besides the aerodynamic speed at least one further quantity pertinent to the position of the operating point in the family of characteristics of the fluid-flow machine is employed for control, **characterized in that** the dependence of blade variation on the operating point at a given aerodynamic speed is determined by means of a degree of throttling and that the degree of throttling relates to the design operating line of the fluid-flow machine and **in that** blade variation is accomplished by control in incremental dependence as per $\alpha_V = \alpha_{VBL-E} + \Delta\alpha_V$ such that a basic blade variation is effected by conventional control of the blade-variation rotation angle in dependence of the aerodynamic speed in the form of $\alpha_{VBL-E}$ = fkt ($N_{red}$) and that further, at a given aerodynamic speed, a correction of the variation angle in dependence of the degree of throttling in the form of $\Delta\alpha_V$ = fkt ($N_{red}$, DG) is added.

**2.** Method in accordance with Claim 1, **characterized in that** the degree of throttling is defined by means of $\beta$ values of the fluid-flow machines as per

$$DG = \frac{\beta - \beta_{BL}\ (N_{red})}{\beta_{AG}\ (N_{red}) - \beta_{BL}\ (N_{red})}$$

**3.** Method in accordance with Claim 1, **characterized in that** the degree of throttling is defined by means of values of the reduced outlet mass flow of the fluid-flow machines as per

$$DG = \frac{\dot{m}_{2red} - \dot{m}_{2redBL}(N_{red})}{\dot{m}_{2redAG}(N_{red}) - \dot{m}_{2redBL}(N_{red})}$$

4. Method in accordance with Claim 1, **characterized in that** the degree of throttling is defined by means of values of the total pressure ratio of the fluid-flow machines as per

$$DG = \frac{\Pi - \Pi_{BL}(N_{red})}{\Pi_{AG}(N_{red}) - \Pi_{BL}(N_{red})}$$

5. Method in accordance with Claim 1, **characterized in that** the degree of throttling is defined by means of values of the total temperature ratio of the fluid-flow machines as per

$$DG = \frac{\tau - \tau_{BL}(N_{red})}{\tau_{AG}(N_{red}) - \tau_{BL}(N_{red})}$$

6. Method in accordance with Claim 1, **characterized in that** the degree of throttling is defined by means of values of the total temperature ratio of a gas turbine as per

$$DG = \frac{\tau_{31} - \tau_{31BL}(N_{red})}{\tau_{31AG}(N_{red}) - \tau_{31BL}(N_{red})}$$

7. Method in accordance with Claim 1, **characterized in that** the degree of throttling is defined by means of values of the corrected thrust-specific fuel mass flow of a gas turbine as per

$$DG = \frac{b_{Fkorr} - b_{FkorrBL}(N_{red})}{b_{FkorrAG}(N_{red}) - b_{FkorrBL}(N_{red})}$$

8. Method in accordance with Claim 1, **characterized in that** the degree of throttling is defined as a function of the time rate of change of the fuel mass flow DKDT = d ($\dot{m}_{KS}$) / d t of a gas turbine as per DG = fkt ($N_{red}$, DKDT).

9. Method in accordance with Claim 1, **characterized in that** the degree of throttling is defined as a function of the time rate of change of the shaft torque DMDT = dM / dt of the respective component as per DG = fkt ($N_{red}$, DMDT).

10. Method in accordance with Claim 1, **characterized in that** the method is used for the variation of at least one inlet guide vane or stator row of a fluid-flow machine.

11. Method in accordance with Claim 1 or 10, **characterized in that** the method is used for stationary operation of the fluid-flow machine.

12. Method in accordance with Claim 1 or 10, **characterized in that** the method is used for transient (instationary) operation of the fluid-flow machine.

13. Method in accordance with one of the Claims 1 or 10 to 12, **characterized in that** the method is provided for achieving an increased surge limit in the family of characteristics (representation of the total pressure ratio $\pi$ as a function of the reduced inlet mass flow $\dot{m}_{1red}$) of the fluid-flow machine.

14. Method in accordance with one of the Claims 1 or 10 to 13, **characterized in that** the method is provided for achieving increased efficiency in the family of characteristics (representation of the total pressure ratio $\pi$ as a function of the reduced inlet mass flow $\dot{m}_{1red}$) of the fluid-flow machine at positions off a predetermined design operating line.

## Revendications

1. Procédé destiné à ajuster au moins une rangée d'aubes d'une turbomachine, lequel en fonction du point de fonctionnement actuel fait intervenir à des fins de régulation, outre le régime aérodynamique, au moins une autre grandeur tenant compte de la position du point de fonctionnement dans le champ caractéristique de la turbomachine, **caractérisé en ce que** la dépendance par rapport au point de fonctionnement de l'ajustage des aubes pour un régime aérodynamique donné est relevée à l'aide d'un degré d'étranglement, et que le degré d'étranglement se réfère à la ligne de fonctionnement théorique de la turbomachine, l'ajustage des aubes ayant lieu par régulation suivant une fonction incrémentielle selon la formule $\alpha_V = \alpha_{VBL-E} + \Delta\alpha_V$, de manière telle qu'un ajustage de base des aubes est effectué par régulation conventionnelle de l'angle d'ajustage de rotation en fonction du régime aérodynamique sous la forme $\alpha_{VBL-E}$ = fkt ($N_{red}$), et que de plus pour un régime aérodynamique donné, est ajoutée en fonction du degré d'étranglement une correction de l'angle d'ajustage sous la forme $\Delta\alpha_V$ = fkt ($N_{red}$, DG).

2. Procédé selon la revendication n° 1, **caractérisé en ce que** le degré d'étranglement est défini à l'aide de valeurs $\beta$ des turbomachines selon la formule

$$DG = \frac{\beta - \beta_{BL}(N_{red})}{\beta_{AG}(N_{red}) - \beta_{BL}(N_{red})}$$

3. Procédé selon la revendication n° 1, **caractérisé en ce que** le degré d'étranglement est défini à l'aide de valeurs du flux massique de sortie réduit des turbomachines selon la formule

$$DG = \frac{\dot{m}_{2red} - \dot{m}_{2redBL}(N_{red})}{\dot{m}_{2redAG}(N_{red}) - \dot{m}_{2redBL}(N_{red})}$$

4. Procédé selon la revendication n° 1, **caractérisé en ce que** le degré d'étranglement est défini à l'aide de valeurs du rapport de pression totale des turbomachines selon la formule

$$DG = \frac{\Pi - \Pi_{BL}(N_{red})}{\Pi_{AG}(N_{red}) - \Pi_{BL}(N_{red})}$$

5. Procédé selon la revendication n° 1, **caractérisé en ce que** le degré d'étranglement est défini à l'aide de valeurs du rapport de température totale des turbomachines selon la formule

$$DG = \frac{\tau - \tau_{BL}(N_{red})}{\tau_{AG}(N_{red}) - \tau_{BL}(N_{red})}$$

6. Procédé selon la revendication n° 1, **caractérisé en ce que** le degré d'étranglement est défini à l'aide de valeurs du rapport de température totale d'une turbine à gaz selon la formule

$$DG = \frac{\tau_{31} - \tau_{31BL}(N_{red})}{\tau_{31AG}(N_{red}) - \tau_{31BL}(N_{red})}$$

7. Procédé selon la revendication n° 1, **caractérisé en ce que** le degré d'étranglement est défini à l'aide de valeurs du flux massique corrigé de carburant spécifique de la poussée d'une turbine à gaz selon la formule

$$DG = \frac{b_{Fkorr} - b_{FkorrBL}(N_{red})}{b_{FkorrAG}(N_{red}) - b_{FkorrBL}(N_{red})}$$

8. Procédé selon la revendication n° 1, **caractérisé en ce que** le degré d'étranglement est défini en tant que fonction du taux de modification dans le temps du flux massique de carburant DKDT = d ($\dot{m}_{KS}$) / d t d'une turbine à gaz selon la formule DG = fkt ($N_{red}$, DKDT).

9. Procédé selon la revendication n° 1, **caractérisé en ce que** le degré d'étranglement est défini en tant que fonction du taux de modification dans le temps du couple d'arbre DMDT = dM / dt du composant concerné selon la formule DG = fkt ($N_{red}$, DMDT).

10. Procédé selon la revendication n° 1, **caractérisé en ce que** le procédé est destiné à l'ajustage d'au moins une rangée d'aubes directrices d'entrée ou de stator d'une turbomachine.

11. Procédé selon la revendication n° 1 ou n° 10, **caractérisé en ce que** le procédé est mis en oeuvre lors d'un fonctionnement stationnaire de la turbomachine.

12. Procédé selon la revendication n° 1 ou n° 10, **caractérisé en ce que** le procédé est mis en oeuvre lors d'un fonctionnement transitoire (non stationnaire) de la turbomachine.

13. Procédé selon une des revendications n° 1 ou n° 10 à n° 12, **caractérisé en ce que** le procédé est prévu pour atteindre une limite accrue de décrochage dans le champ caractéristique (représentation du rapport de pression totale $\pi$ en fonction du flux massique d'entrée réduit $\dot{m}_{1red}$) de la turbomachine.

14. Procédé selon une des revendications n° 1 ou n° 10 à n° 13, **caractérisé en ce que** le procédé est prévu pour atteindre un rendement accru dans le champ caractéristique (représentation du rapport de pression totale $\pi$ en fonction du flux massique d'entrée réduit $\dot{m}_{1red}$) de la turbomachine à des points à l'écart d'une ligne de fonctionnement théorique donnée.

Fig.1: Mögliche Konfigurationen erfindungsrelevanter Strömungsarbeitmaschinen

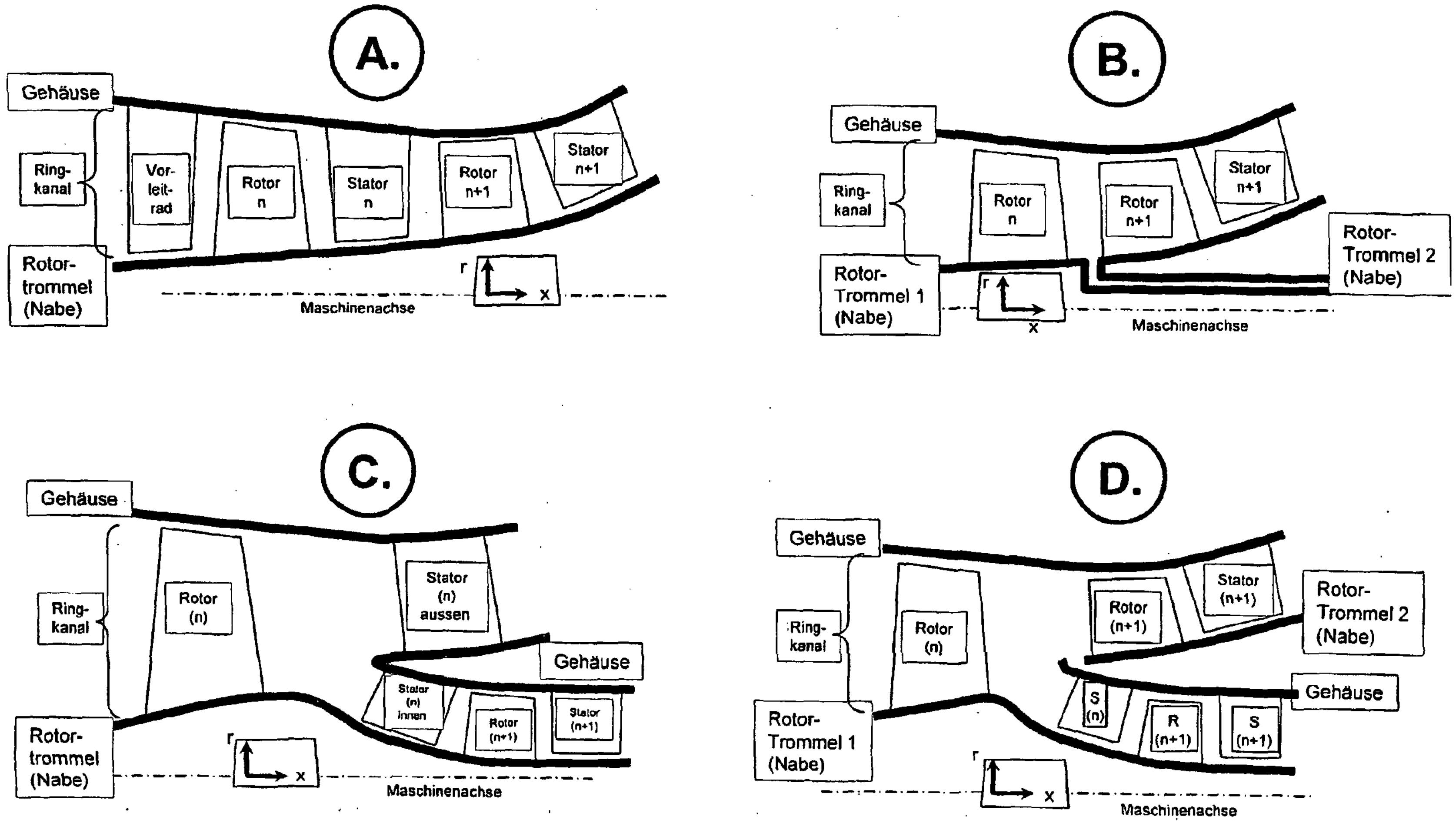

# Fig.2a: Stand der Technik, Kennfeld

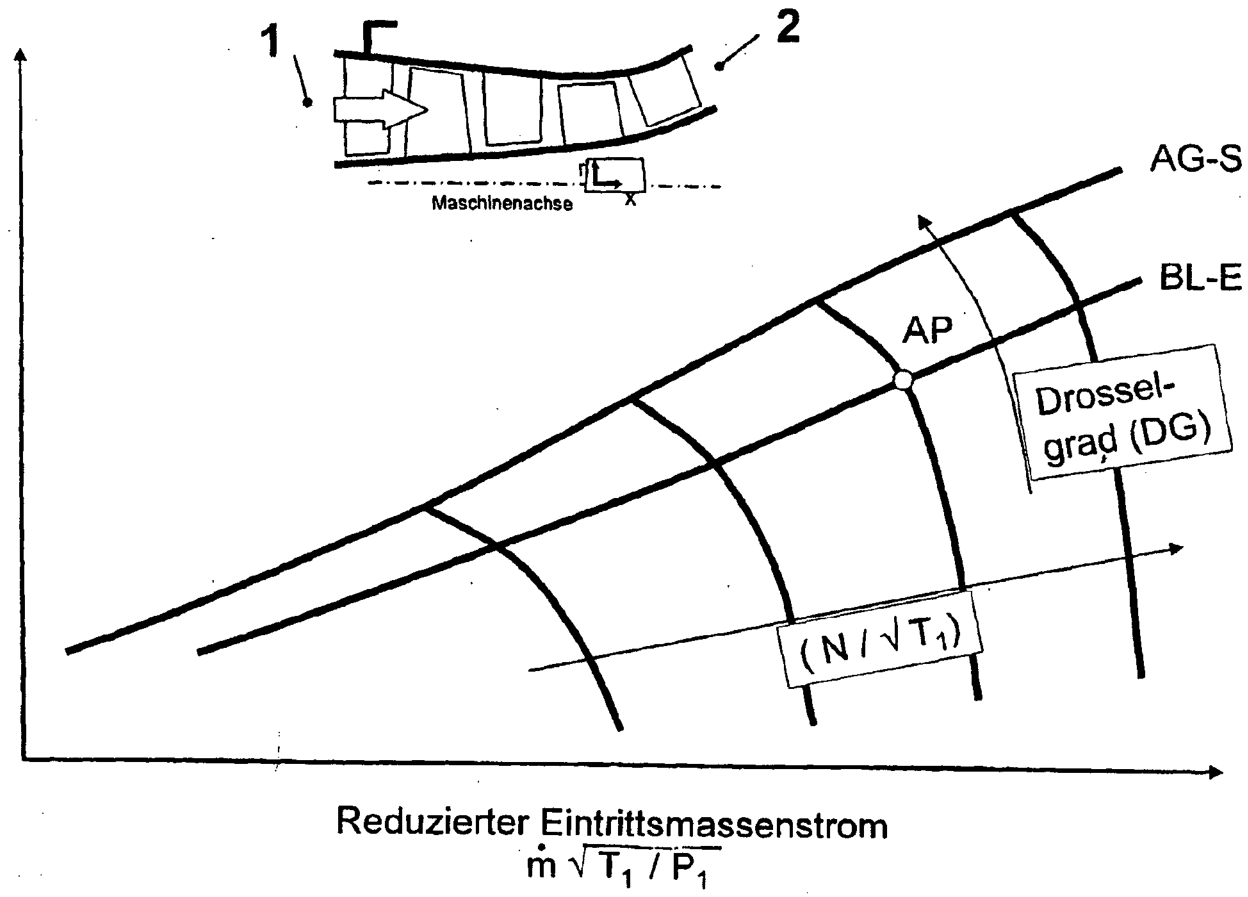

# Fig.2b: Stand der Technik, Schaufelverstellung

Verstellgesetz

Verstellschaufel

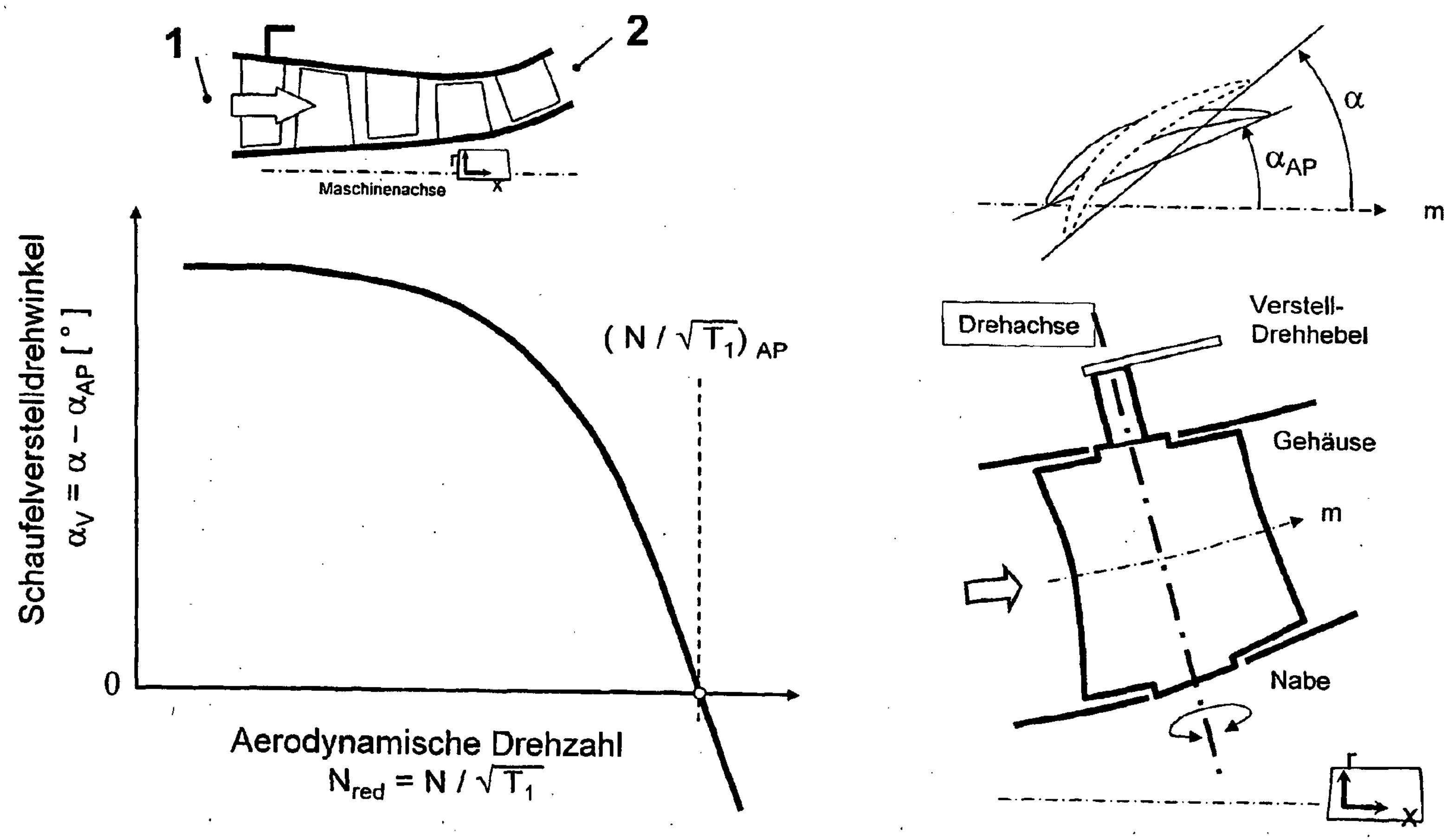

Fig.3a: Erfindungsgemäße Lösung, Kennfeld

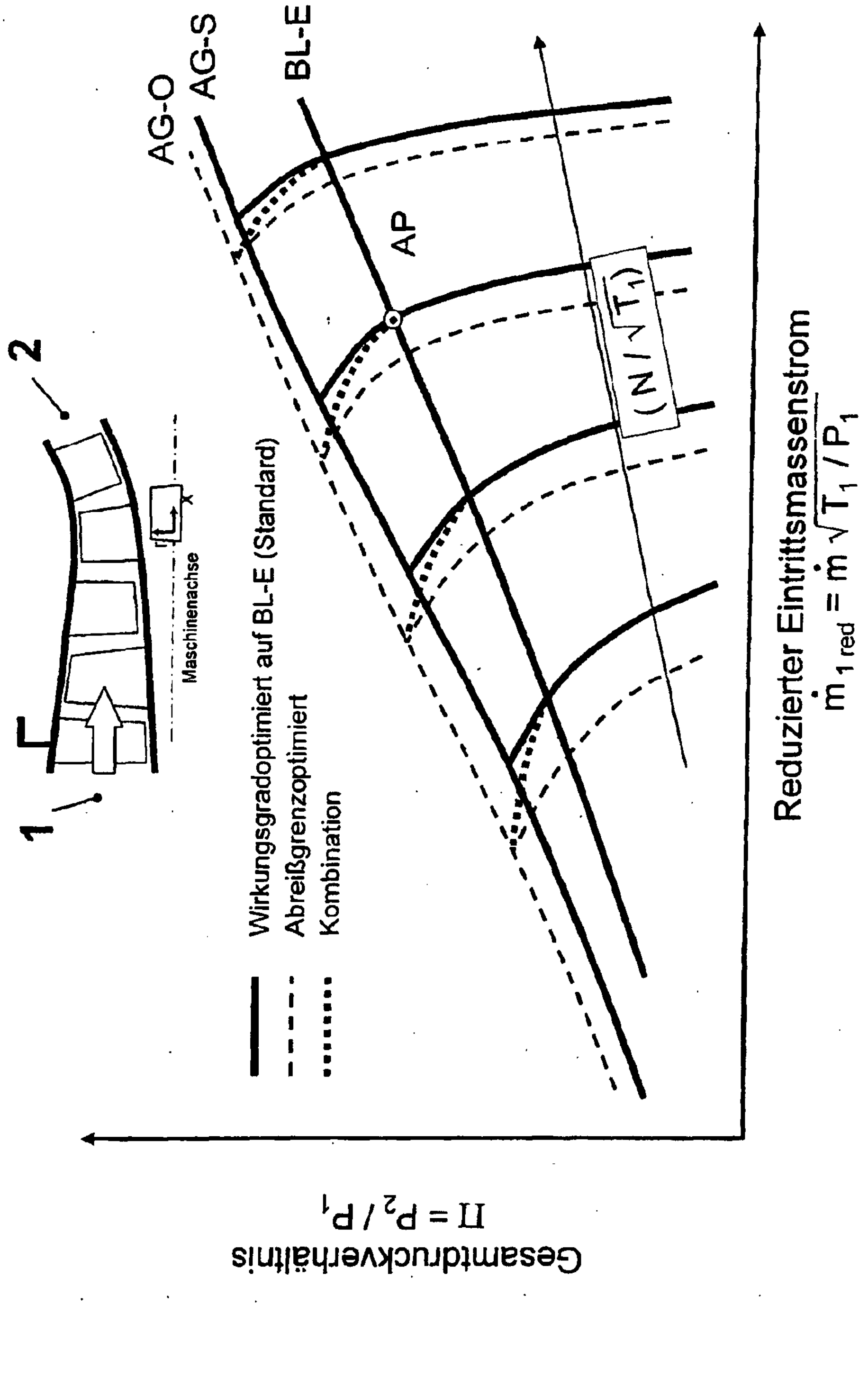

## Fig.3b: Erfindungsgemäße Lösung, Schaufelverstellung

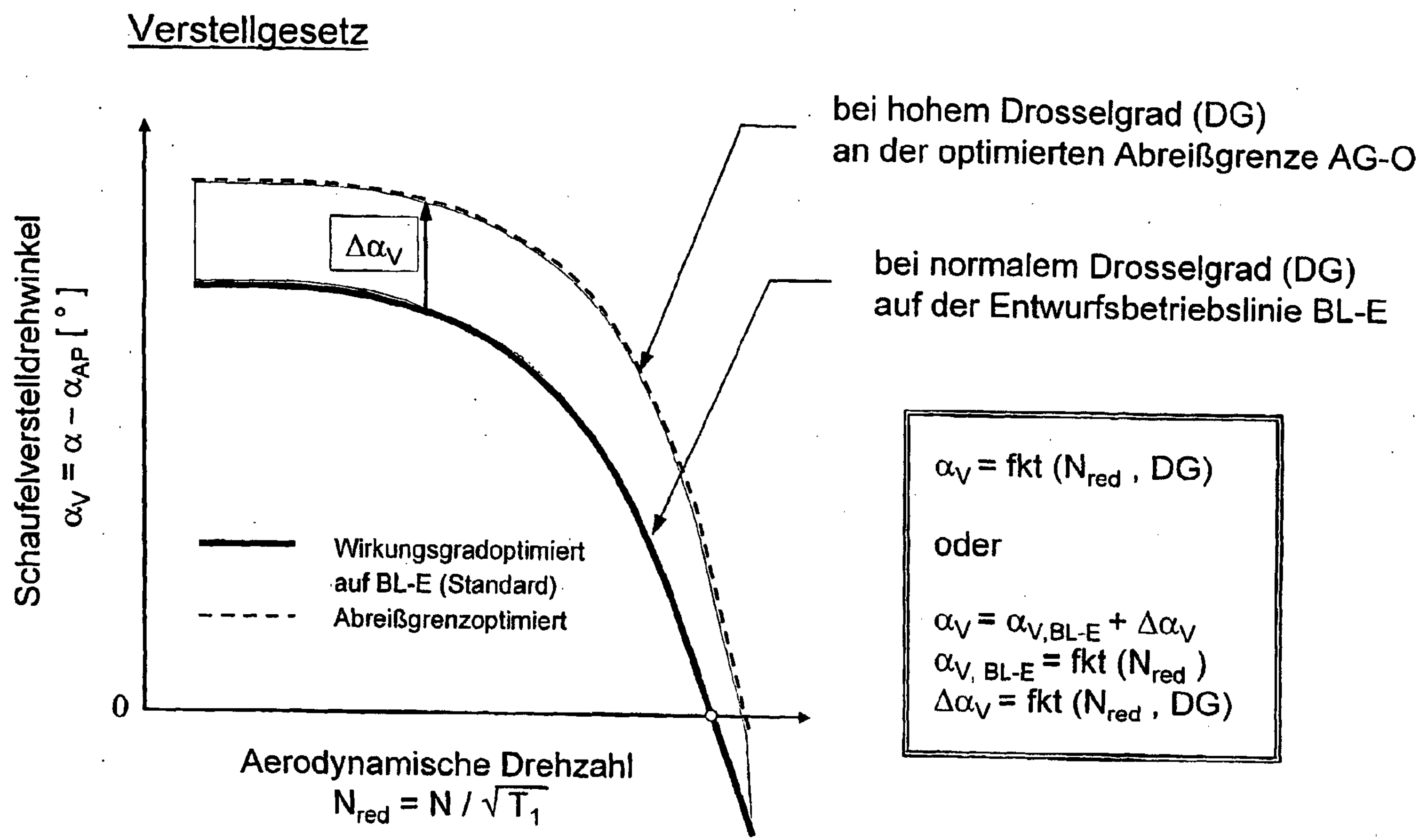

# Fig.4a: Weitere erfindungsgemäße Lösung, Kennfeld

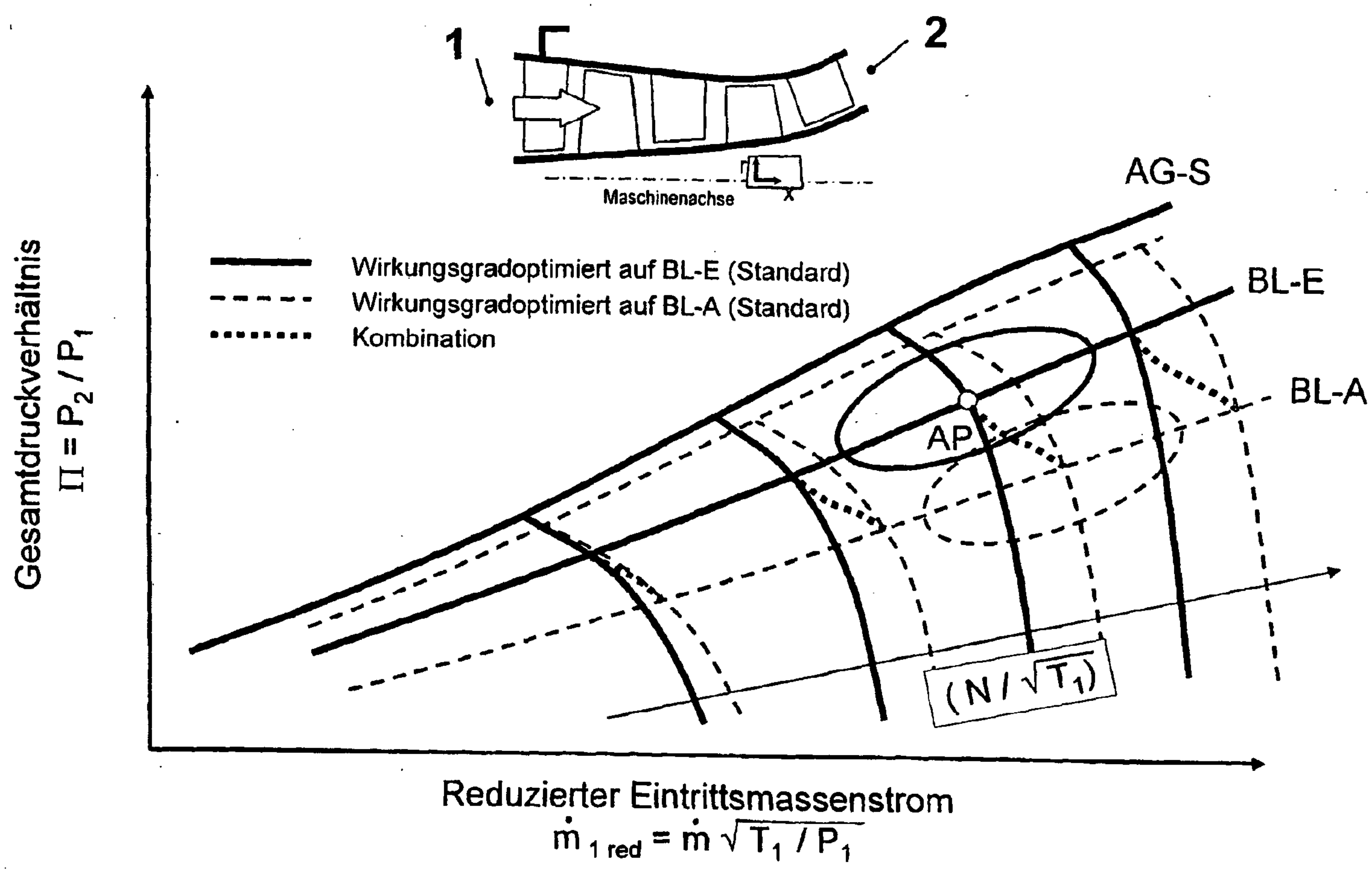

# Fig.4b: Weitere erfindungsgemäße Lösung, Schaufelverstellung

Verstellgesetz

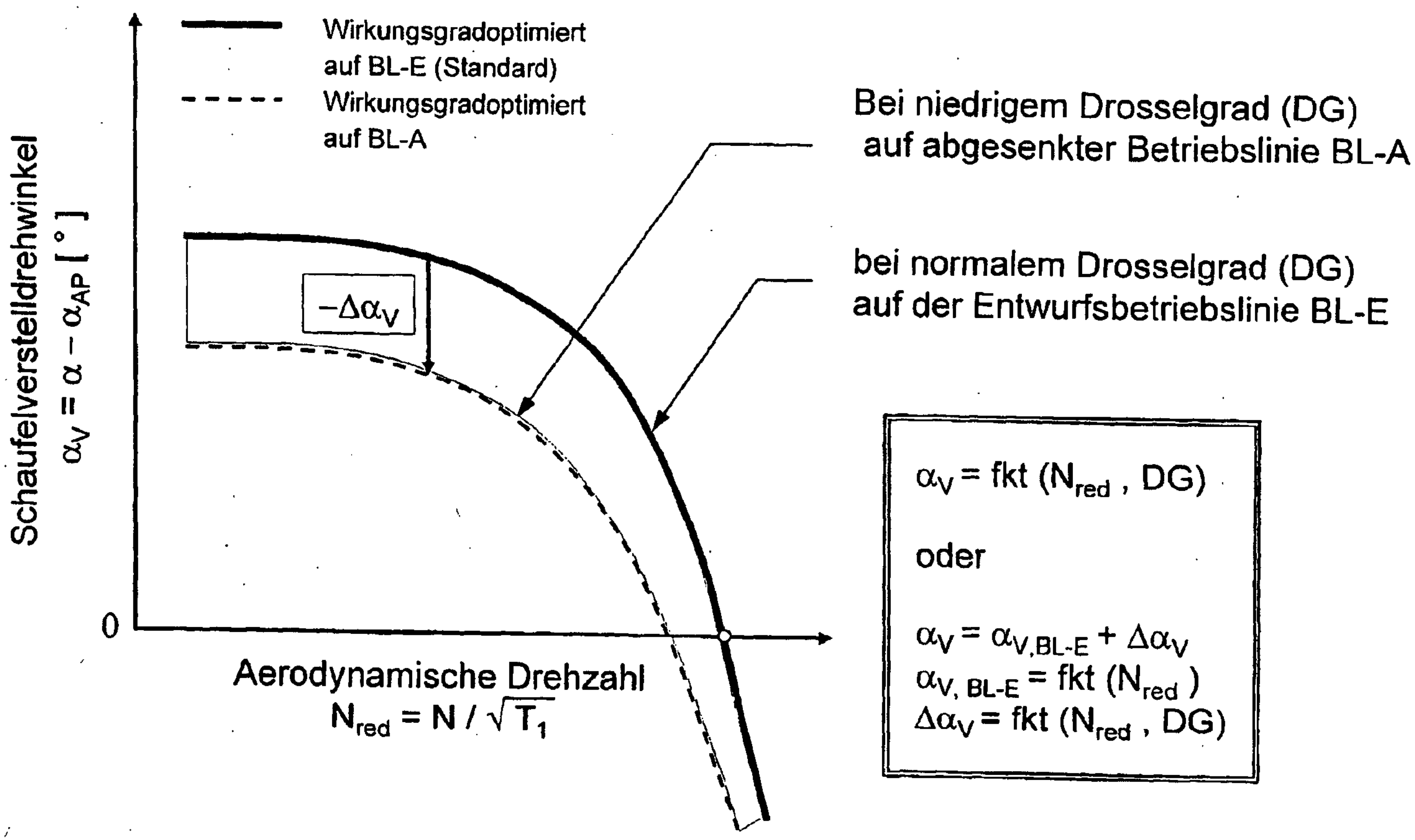

Fig.5a: Anwendung am Beispiel einer Gasturbine, Kennfeld

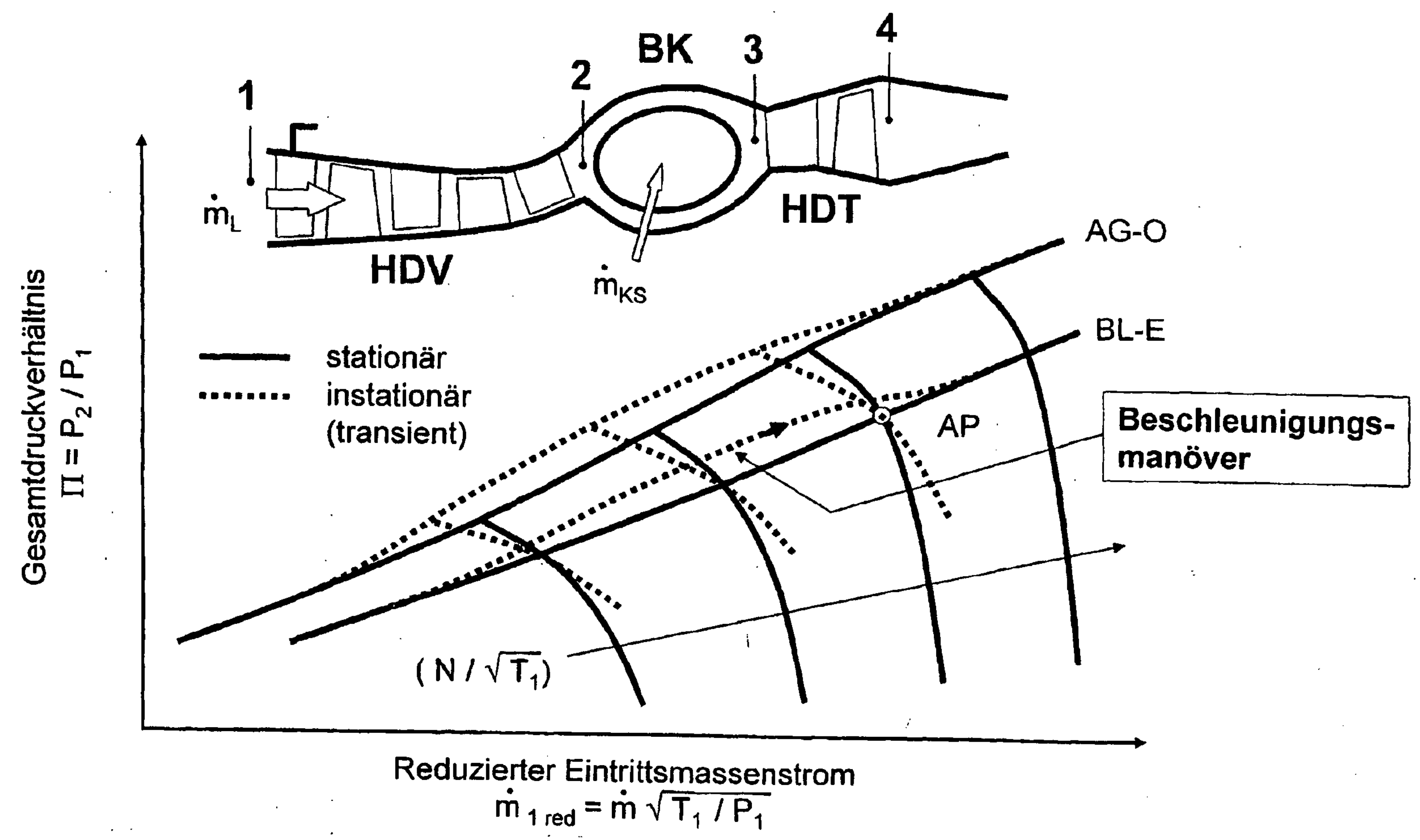

# Fig.5b: Anwendung am Beispiel einer Gasturbine, Schaufelverstellung

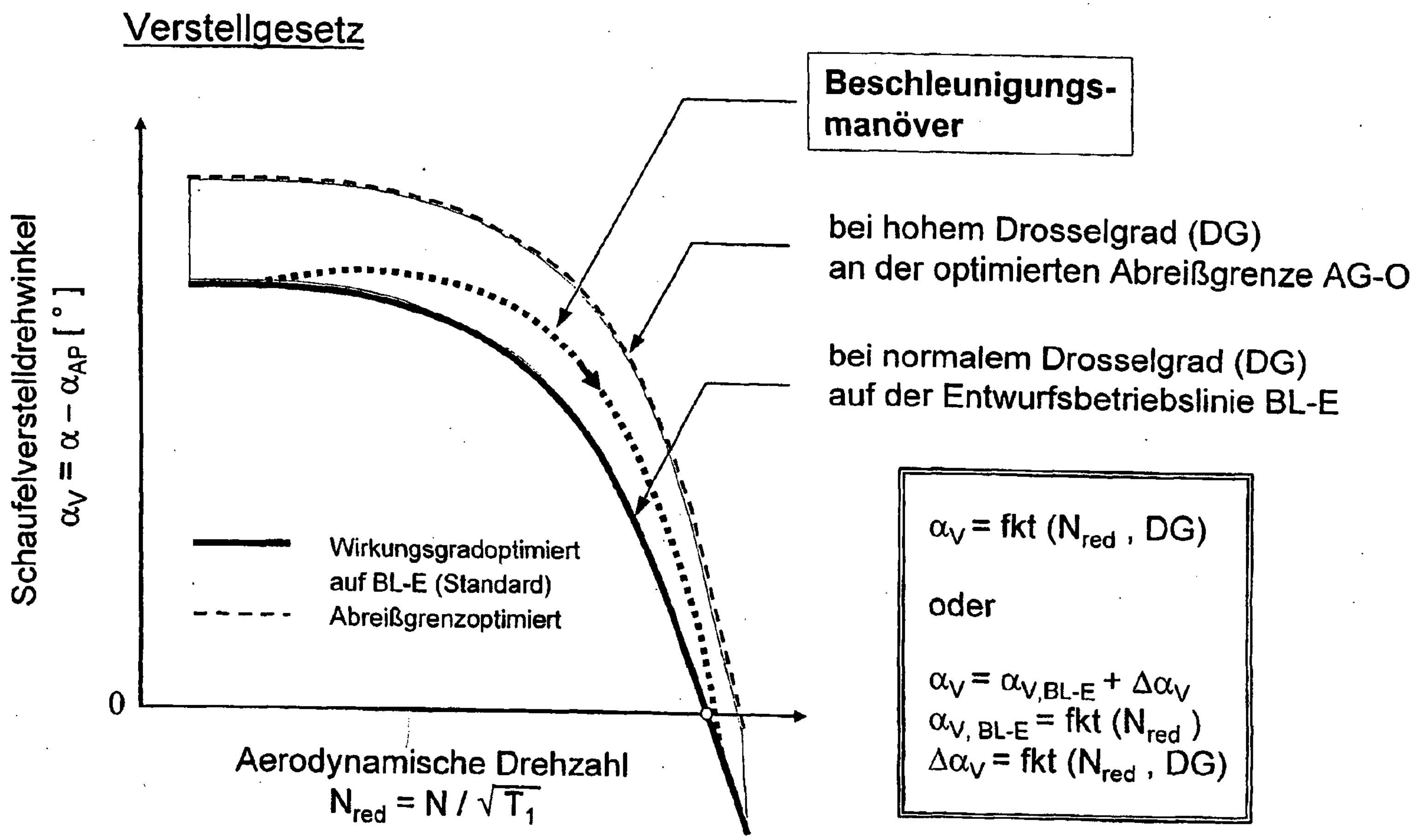

# Fig.6a: Möglichkeiten der Definition des Drosselgrades mit Hilfe von Betriebsgrößen der SAM (Teil 1)

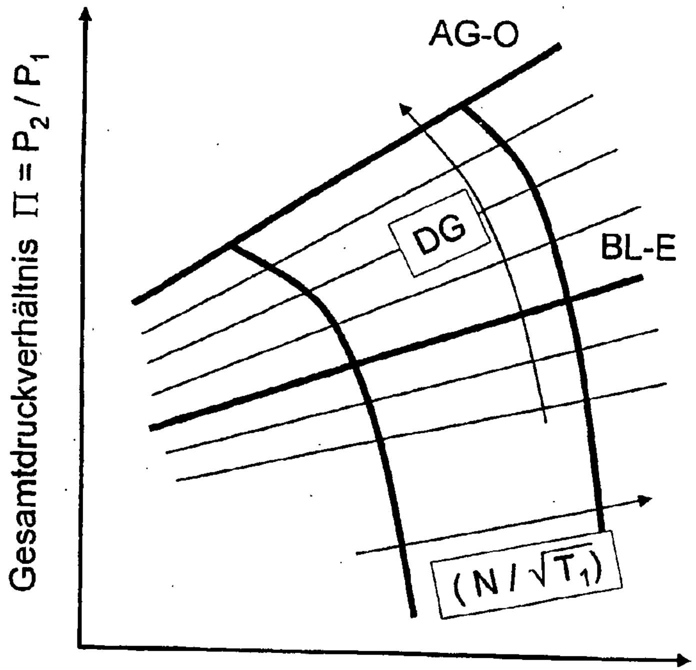


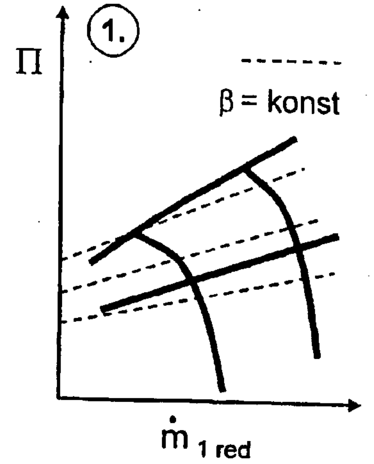


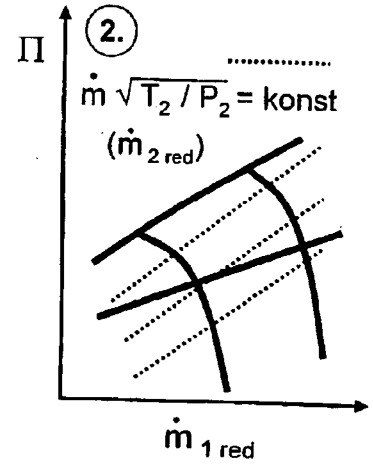


(1.) $$DG = \frac{\beta - \beta_{BL}(N_{red})}{\beta_{AG}(N_{red}) - \beta_{BL}(N_{red})}$$

(2.) $$DG = \frac{\dot{m}_{2\,red} - \dot{m}_{2\,red\,BL}(N_{red})}{\dot{m}_{2\,red\,AG}(N_{red}) - \dot{m}_{2\,red\,BL}(N_{red})}$$

# Fig.6b: Möglichkeiten der Definition des Drosselgrades mit Hilfe von Betriebsgrößen der SAM (Teil 2)

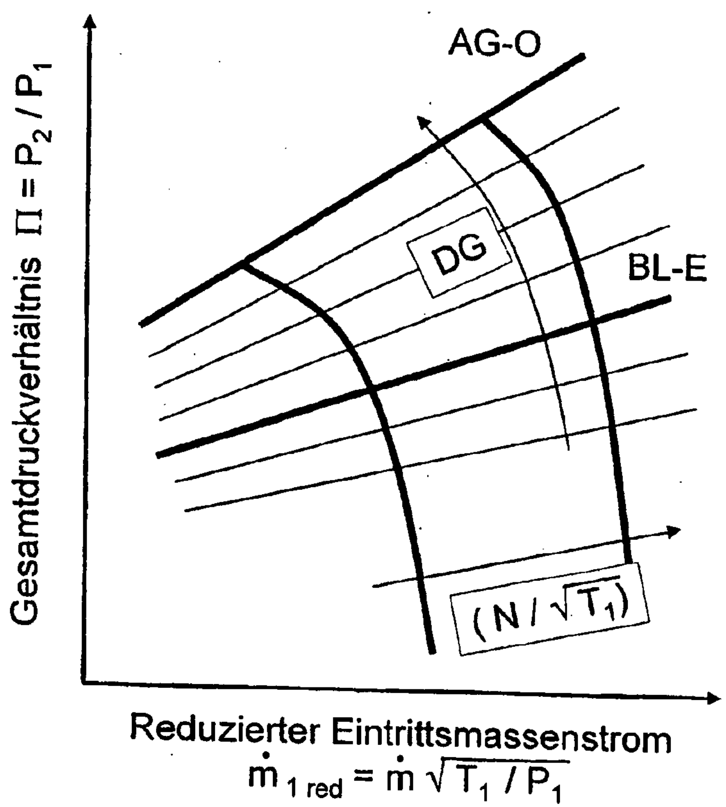


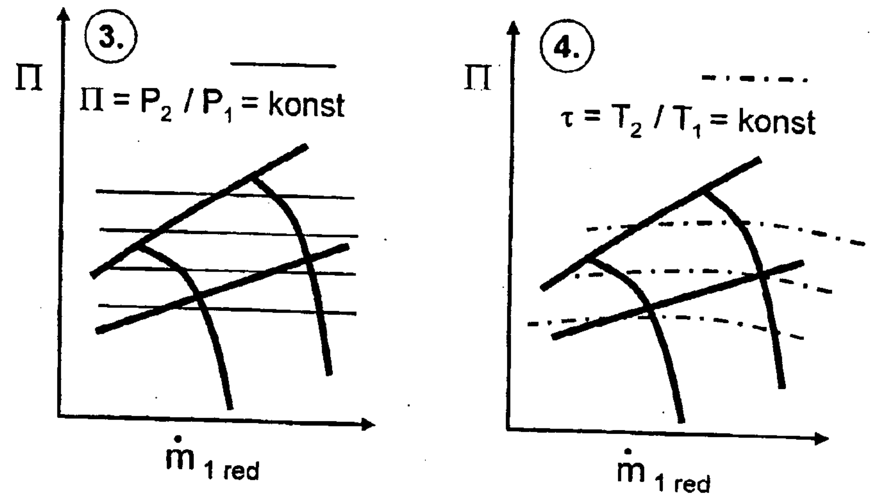


(3.) $$DG = \frac{\Pi - \Pi_{BL}(N_{red})}{\Pi_{AG}(N_{red}) - \Pi_{BL}(N_{red})}$$

(4.) $$DG = \frac{\tau - \tau_{BL}(N_{red})}{\tau_{AG}(N_{red}) - \tau_{BL}(N_{red})}$$

# Fig.7: Möglichkeiten der Definition des Drosselgrades mit Hilfe von Betriebsgrößen einer Gasturbine

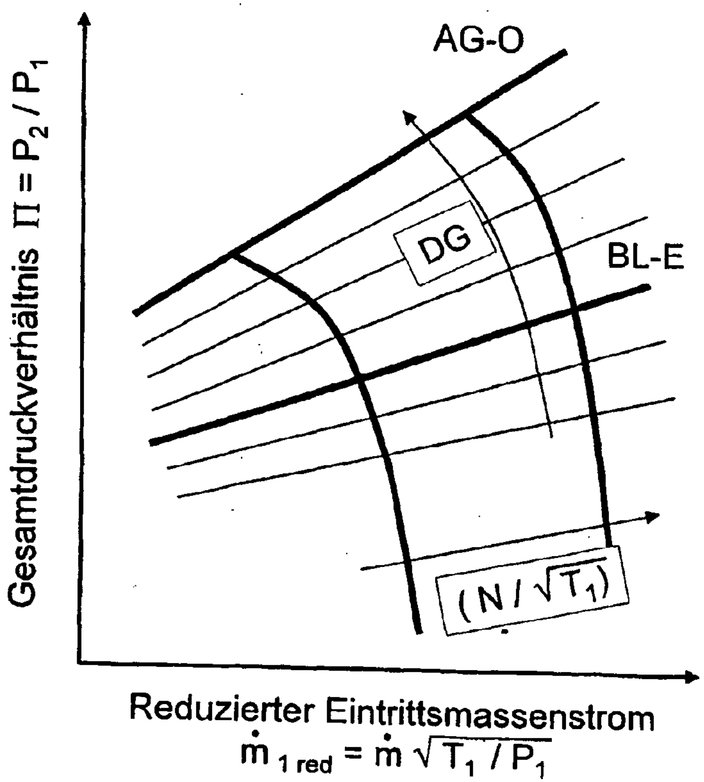


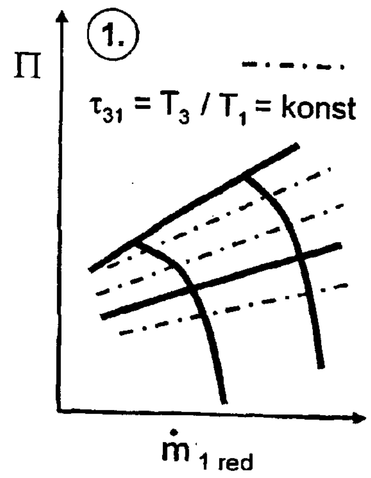


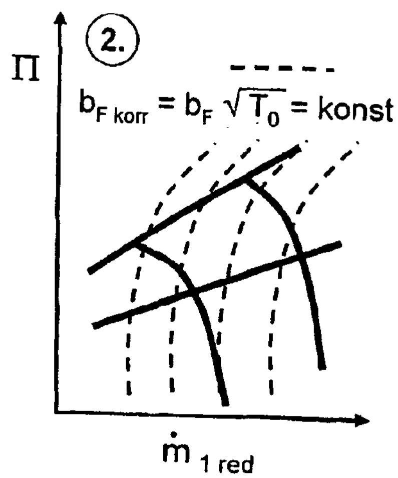


(1.) $$DG = \frac{\tau_{31} - \tau_{31\,BL}(N_{red})}{\tau_{31\,AG}(N_{red}) - \tau_{31\,BL}(N_{red})}$$

(2.) $$DG = \frac{b_{F\,korr} - b_{F\,korr\,BL}(N_{red})}{b_{F\,korr\,AG}(N_{red}) - b_{F\,korr\,BL}(N_{red})}$$

**Fig.8: Abhängigkeit des zusätzlichen Schaufelverstelldrehwinkels vom Drosselgrad**

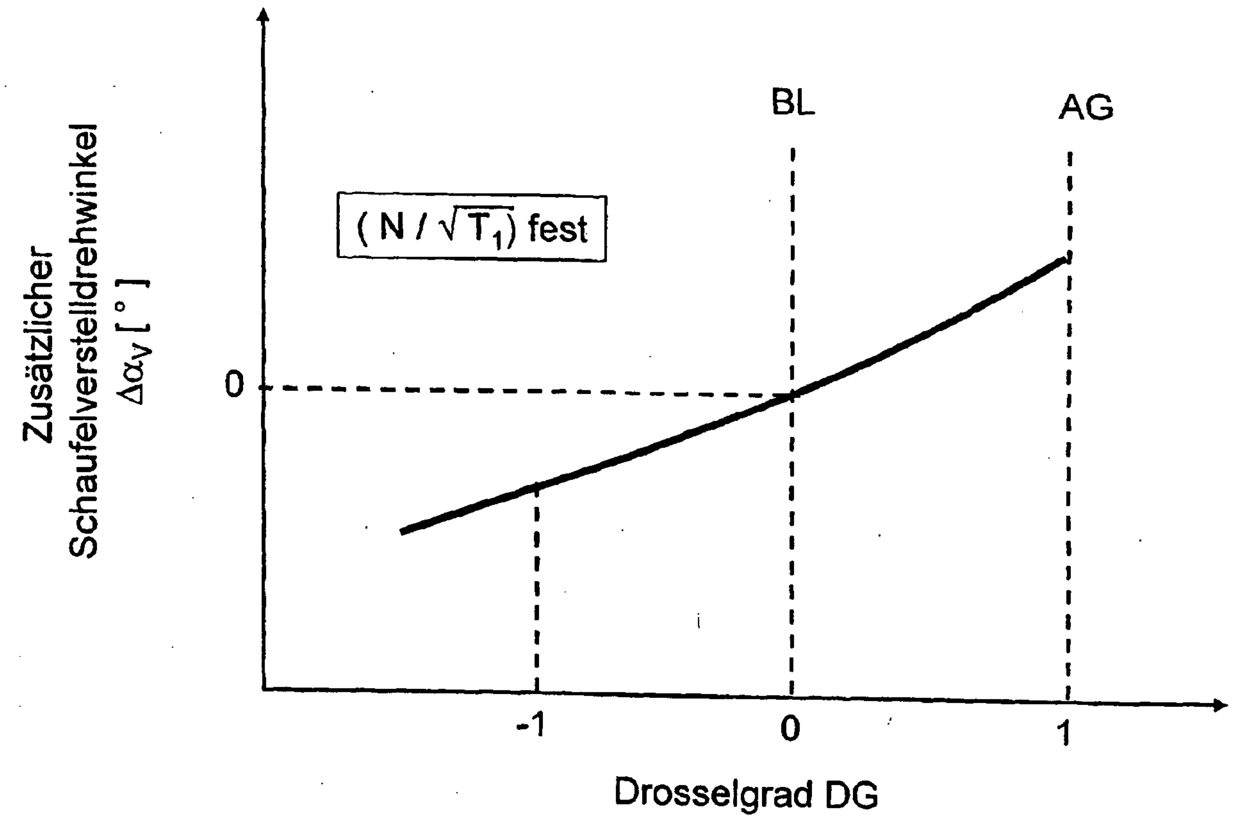

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 4216033 A1
- DE 19901509 A1
- DE 102004025628 A1
- US 4028884 A
- US 2005147492 A1